**Europäisches Patentamt**

**European Patent Office**

**Office européen des brevets**

(19)

(11) Publication number : **0 655 703 A2**

# (12) EUROPEAN PATENT APPLICATION

(21) Application number : **94308698.3**

(22) Date of filing : **24.11.94**

(51) Int. Cl.⁶ : **G06K 9/42**

(30) Priority : **29.11.93 US 159415**

(43) Date of publication of application :
**31.05.95 Bulletin 95/22**

(84) Designated Contracting States :
**DE FR GB**

(71) Applicant : **Hewlett-Packard Company
3000 Hanover Street
Palo Alto, California 94304 (US)**

(72) Inventor : **Burke, Kevin S.
4210 Suncrest Court
Fort Collins, CO 80525 (US)**

(74) Representative : **Powell, Stephen David et al
WILLIAMS, POWELL & ASSOCIATES
34 Tavistock Street
London WC2E 7PB (GB)**

(54) **Method for scanning small fonts in an optical character recognition system.**

(57) A method for improving scanning accuracy of small fonts. The method first sharpens the data (210) and then up samples (222, 224) the data to increase the size of characters. Sharpening occurs first in the y direction (402-412) by examining pixels above and below each pixel as it is processed and adjusting the pixel. After sharpening the data, the data is upsampled in the y direction by creating a new scan row (702-716) of pixels between each existing scan row of pixels, by averaging (708-712) the gray scale level of the pixels of the two scan rows and placing the average value in the new scan row. In a similar manner, the data is increased within each scan row by adding a new pixel between each of the existing pixels (902-918). The new pixel between each pair of pixels is formed by averaging the value of the two pixels within the pair.

FIG. 1

EP 0 655 703 A2

This invention relates to computer systems and more particularly to optical character recognition (OCR) within computer systems. Even more particularly, the invention relates to recognizing very small and very large fonts using optical character recognition.

Optical character recognition systems have a high accuracy rate of identifying characters when those characters are between eight and fourteen "points" in size, where a point is 1/72 of an inch. As the point size varies from this "golden range" the recognition accuracy can drop off dramatically, especially for smaller point sizes below eight points. One factor affecting the drop off in accuracy is that most documents are composed of text in the size range of eight to twelve points, so most OCR systems have been tuned to these particular point sizes. When attempting to recognize characters outside this size range, many of the features used for recognition of character sizes within the eight-twelve range may be distorted or invalid for character sizes outside this range. For example, a system might have a heuristic that expects a relatively narrow character stroke width when compared to the bounding box width of the character, however, for very large text, the stroke widths are all very wide, and thus, would be invalid. These types of problems can still occur even if the OCR application normalizes characters prior to feature extraction.

Another factor affecting recognition of very small characters is feature loss. Feature loss occurs with small text when character features, such as closures that occur in characters like "a", "e", etc. become filled in. For example, if the closure in an "e" becomes filled in, the "e" might be recognized incorrectly as a "c" by an OCR system.

There is need in the art then for a system to improve the accuracy of recognition of very small characters in an optical character recognition system. The present invention meets this and other needs in the art.

It is an aspect of the present invention to improve scanning accuracy for small fonts in an optical character recognition system.

It is another aspect of the invention to improve such accuracy by upsampling scanned data to provide a larger font for scanning.

Still another aspect of the invention is to sharpen the scanned data before upsampling the data.

The above and other aspects of the invention are accomplished in a system that processes scanned gray scale image data by first sharpening the data and then up sampling the data to increase the size of characters contained within the data to therefore improve optical character recognition scanning accuracy.

The data is first sharpened in the y direction by examining pixels above and below each pixel as it is processed and adjusting the current pixel based upon the data above and below it. After sharpening the data, the data is upsampled in the y direction by creating a new scan row of pixels between each existing scan row of pixels. This new scan row is created by averaging the gray scale level of the pixels of the two scan rows and placing the average value in the new scan row located between the two scan rows. In a similar manner, the data is increased within each scan row by adding a new pixel between each of the existing pixels within the scan row. The new pixel between each pair of pixels is formed by averaging the value of the two pixels within the pair.

The above and other aspects, features, and advantages of the invention will be better understood from the following description of embodiments of the invention, illustrated in the drawings, wherein:

Fig. 1 shows a block diagram of a computer system containing the present invention;

Fig. 2 shows a flowchart of the driver software section of the invention;

Fig. 3 shows a diagram of the set of pixels used in sharpening the data in the invention;

Fig. 4 shows a flowchart of the sharpening method of the invention;

Fig. 5 shows a section of a sharpening lookup table used to improve performance of the invention;

Fig. 6 shows the method of the invention that forms a new scan line of pixels between each original scan line of the data;

Fig. 7 shows a flowchart of the method for upsampling in the Y direction;

Fig. 8 shows the method of the invention that forms a new pixel between each horizontal pixel of the data;

Fig. 9 shows a flowchart of the method for upsampling in the X direction;

Fig. 10 shows how an index is formed in the method of Fig. 9;

Fig. 11 shows how data is retrieved from a lookup table in the method of Fig. 9; and

Fig. 12 shows a portion of the upsampling lookup table used in the method of Fig. 9.

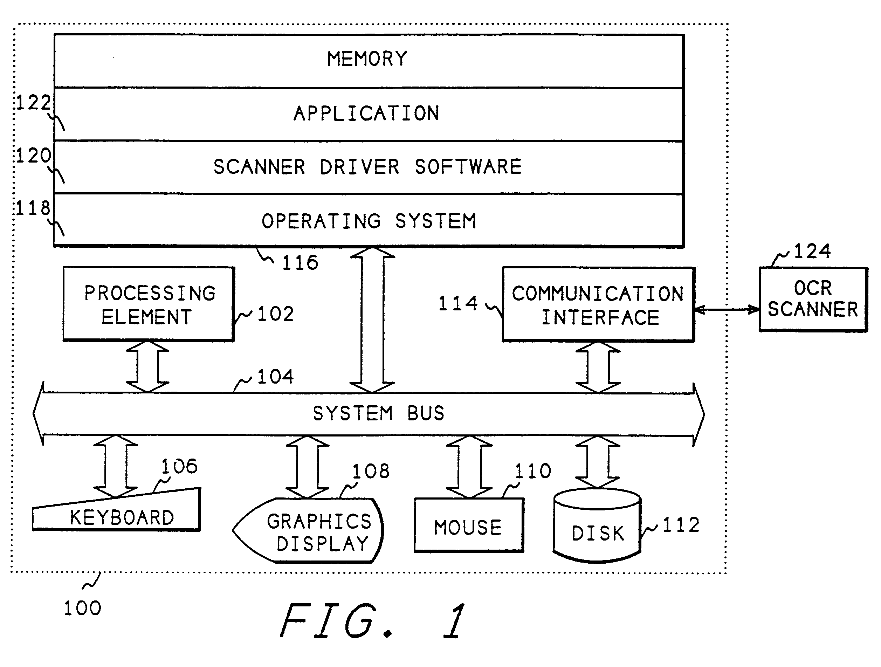

Fig. 1 shows a block diagram of a computer system containing the present invention. Referring now to Fig. 1, a computer system 100 contains a processing element 102 which communicates to other elements of the computer system 100 over a system bus 104. A keyboard 106 and a mouse 110 provide text and graphical locator input to the computer system 100 and a graphics display 108 allows the software within the computer system 100 to output data to a user of the system. A disk 112 contains the software and data of the present invention and a communications interface 114 allows the present invention to communicate to an optical character recognition scanner 124.

A memory 116 contains an operating system 118, which might be the MS-DOS operating system or one of the many other operating systems available. Scanner driver software 120 communicates to the OCR scanner 124 through the operating system 118 and provides services to an application program 122. The present invention is contained within the scanner driver software 120, along with a recognizer that accepts data from the present invention and converts the characters into a machine readable form such as ASCII.

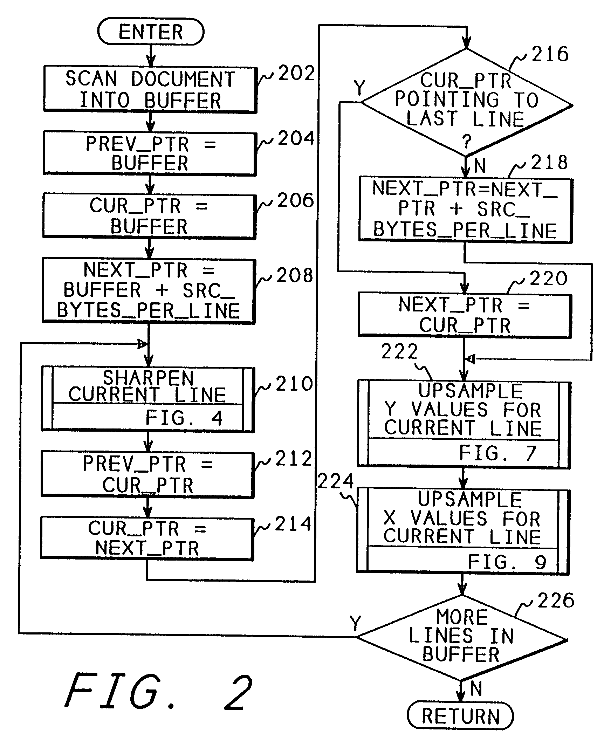

Fig. 2 shows a flowchart of the driver software section of the invention. Fig. 2 will be called by the scanner driver software 120 (Fig. 1) whenever the scanner driver software 120 wishes to upsample data scanned from a document or upsample a portion of data scanned from a document. The scanner driver software 120 might decide to upsample a portion of the document, such as figure titles, which are often smaller text, however, the determination of which portions of the document to upsample is not part of the invention and will not be discussed further.

Referring now to Fig. 2, when called by the scanner driver software 120 (Fig. 1), control enters Fig. 2 at block 202. Block 202 scans the document, or a portion of the document into a buffer. In another embodiment, this operation could be performed by the scanner driver software before calling Fig. 2. Block 204 obtains the address of the beginning of the buffer and sets this address into the pointer variable PREV_PTR. Block 206 sets a CUR_PTR pointer variable, also to the beginning of the buffer. Block 208 sets a NEXT_PTR variable to the beginning of the second scan line in the buffer, determined by the start address of the buffer plus the length of a scanned line of pixels within the buffer. These three pointers will be used to sharpen the data. The PREV_PTR points to the previous line of scanned data, the CUR_PTR points to the line being currently sharpened, and the NEXT_PTR points to the line after the one being sharpened. However, initial conditions require that the previous pointer and current pointer both point to the same line at the beginning of the operation, which starts at the top of the document, with the first scan line.

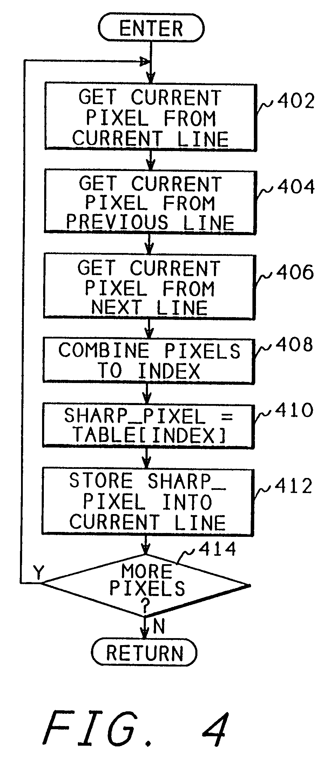

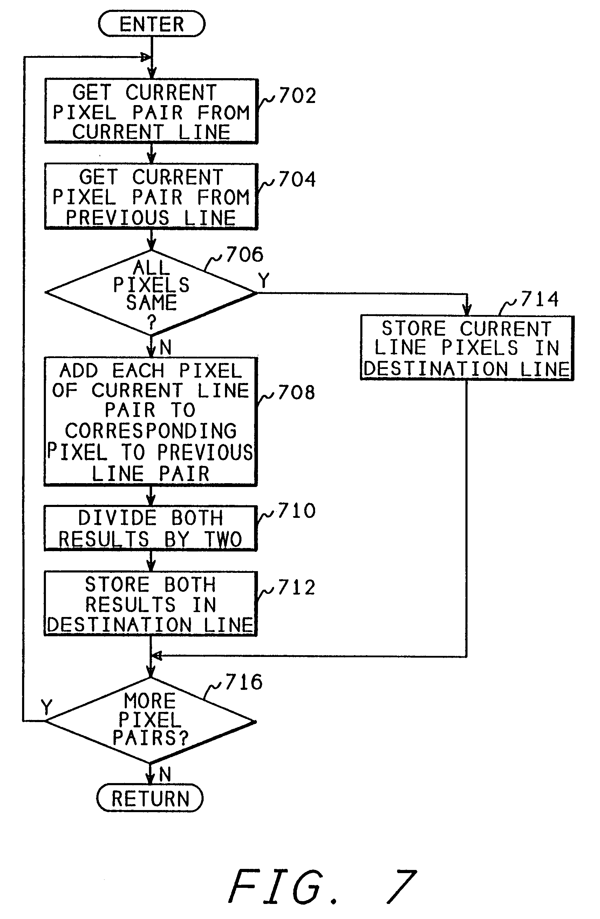

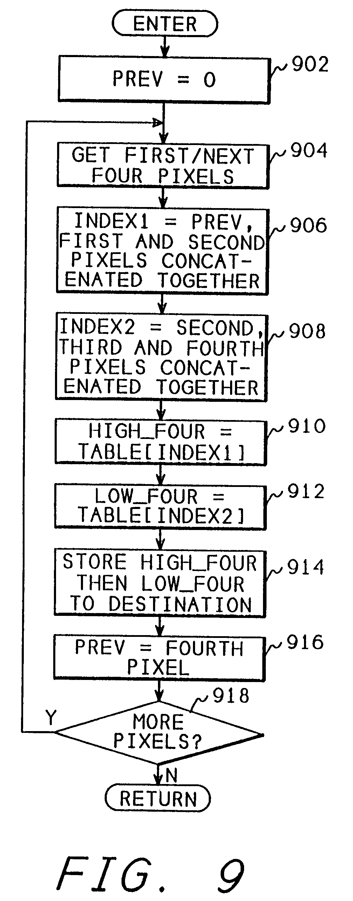

After setting the three pointers, block 210 calls Fig. 4 to sharpen the current line. Block 212 then sets PREV_PTR to CUR_PTR, and block 214 sets CUR_PTR to NEXT_PTR, thus setting up for sharpening the next line of data. Block 216 then determines whether the current pointer is pointing to the last line of the document, and if not, block 216 transfers to block 218 which sets the next pointer equal to the following source line in the document. If the current line is pointing to the last line, block 216 goes to block 220 which simply sets the next pointer equal to the current pointer to scan the last line of the document. After setting up all three pointers for the next sharpening operation, block 222 calls Fig. 7 to upsample the current line in the y direction. Block 224 then calls Fig. 9 to up sample the current line in the x direction and block 226 determines whether there are more lines in the buffer. If there are more lines in the buffer, block 226 returns to block 210 to sharpen the next line. After all lines have been processed, block 226 returns to the scanner driver software 120.

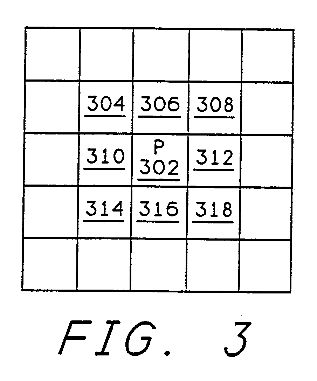

Fig. 3 shows a diagram of the pixels used in sharpening the data in the invention. Referring now to Fig. 3, a pixel 302 is illustrated showing all pixels on all sides of the pixel 302. Of course for pixels on the edge of a document, such as those on the top and bottom lines or left and right edges, pixels may not exist on certain sides. For these non-existent pixels, however, the gray scale value for the background color of the document, typically white, can be substituted, or the edge pixels can simply be ignored.

The value for pixel 302 can be computed by combining the values of all the neighboring pixels 304, 306, 308, 310, 312, 314, 316, and 318 along with the pixel 302 using the equation:

$$\frac{pixel * N - sum(\text{ neighbor pixels })}{M}$$

where N and M are selected to provide the desired sharpening effect.

In the preferred embodiment of the present invention, however, sharpening is most effective when done only in the vertical direction. Therefore, the sharpening in the preferred embodiment of the present invention only pixels 306 and 316 participate. The sharpening is performed by summing the values for pixels 306 and 316, to create a neighboring value, subtracting the neighboring value from four times the value of pixel 302 and dividing the result by 2. Thus, in the preferred embodiment, N = 4 and M = 2. The preferred embodiment also uses a table look up method to arrive at the average values, therefore, adjustments can be made for pixel values that are on the edges of characters.

Fig. 4 shows a flowchart of the sharpening method of the present invention. Fig. 4 is called from block 210 of Fig. 2. Referring now to Fig. 4, after entry, block 402 gets the current pixel from the current line. During the first time through the method of Fig. 4, block 402 it will obtain the first pixel from the current line, and for all other times it will obtain the next pixel for the current line. Block 404 then gets the current pixel from the previous line and block 406 gets the current next pixel from the next line. Block 408 then combines these pixels into an index value.

In the preferred embodiment of the present invention, the gray scale values vary from zero to fifteen, wherein zero is a white value and fifteen is a black value. Those skilled in the art will recognize, however, that these could be reversed wherein zero is a black value and fifteen is a white value, or that an eight bit gray scale could be used. Because sixteen gray scale levels are used in the preferred embodiment, the pixel value is represented by a four bit number. Block 408 combines the three four bit numbers for the three pixels by concatenating them together to form a twelve bit number wherein the previous line pixel represents the high order four bits, the current line pixel represents the middle four bits, and the next line pixel represents the low order four bits. The order is not significant, however, since the lookup table could be created in any order so long as it matches the order of creating the index value. Because the index value contains twelve bits, the lookup table must contain 4,096 entries.

After creating the index value, block 410 retrieves the value for the sharpened pixel from a sharpening lookup table using the index created in block 408.

The sharpening lookup table is created by averaging "valley" pixels that are between two pixels of greater or equal value, and by using the equation described above to heavily sharpen pixels that do not meet the "valley" criteria. Thus the method for creating the sharpening table is:

if( previouspixel >= currentpixel and nextpixel >= currentpixel

then sharpenedpixel = (currentpixel + previouspixel + nextpixel) / 3 else

sharpenedpixel = ((currentpixel * 4) - (previouspixel + nextpixel)) / 2

where "+" represents addition, "-" represents subtraction, "/" represents division and "*" represents multiplication.

Those skilled in the art will recognize that the sharpened pixel could also be computed using the above-described method, rather than using the lookup table.

After obtaining the sharpened pixel value, block 412 stores it back into the current line. Block 414 then determines whether there are more pixels to be processed. If there are more pixels to be processed, block 414 returns to block 402 to get the next pixel from the current line. After all pixels have been processed, block 414 returns to Fig. 2.

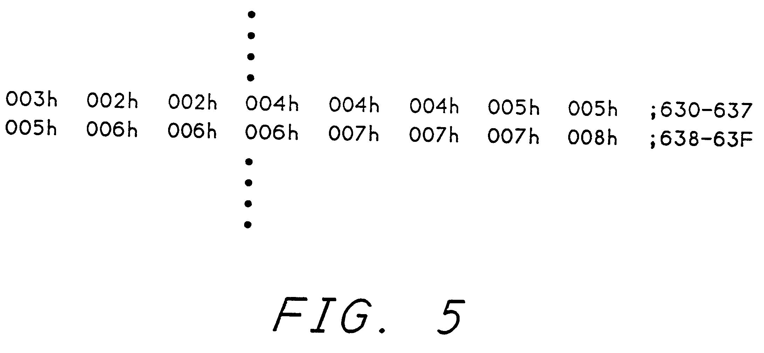

Fig. 5 shows two entries from the sharpening lookup table used in block 410 of Fig. 4. This lookup table is created using the method described above. The two lines shown are for hexadecimal locations 630-637 and for hexadecimal location 638-63F. Location 630 would represent a pixel having a current line value of 3, a previous line value of 6, and a next line value of 0. For a combination of pixels having these values, the sharpened pixel value is hexadecimal 3.

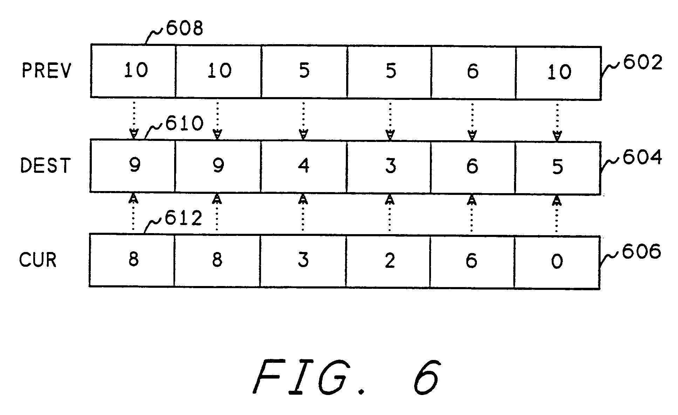

Fig. 6 shows the method of the invention for forming a new scan line between each original scan line of the input data. This effectively increases the number of pixels from the input data by a factor of two. Those skilled in the art will recognize that the data could be upsampled by factors other than a factor of two.

Referring now to Fig. 6, six pixels of a previous scan line 602 are shown being combined with six pixels from a current scan line 606 into a destination scan line 604. The pixels are combined by simple averaging, for example, pixel 608 which has a value of ten is combined with pixel 612 which has a value of eight into a destination pixel 610 having an average value of nine.

Fig. 7 shows a flowchart of the method of the invention for upsampling in the Y direction. Fig. 7 is called from block 222 of Fig. 2 and implements the method described above with respect to Fig. 6. Referring now to Fig. 7, after entry, block 702 gets the current pixel pair from the current line. As described above, in the preferred embodiment a pixel is represented by a four bit value. Therefore, a pair of pixels is represented by eight bits, which is a single byte of data. Therefore, block 702 retrieves the next byte of data from the current line. Block 704 gets the current pixel pair from the previous line, and block 706 determines whether these four pixels have the same value. If the four pixels do have the same value, block 706 transfers to block 714. Since no averaging needs to be performed, block 714 simply stores the current line pixels into the destination line.

If the pixels are not all the same, block 706 transfers to block 708 which adds each pixel of the current line pair to a corresponding pixel of the previous line pair. Block 710 then divides both these results by two to create the average and block 712 then stores these two average pixel values in the destination line.

After storing pixels in the destination line, control goes to block 716 which determines whether there are more pixel pairs, and if there are, block 716 transfers back to block 702. After all pixel pairs have been processed, block 716 returns to Fig. 2.

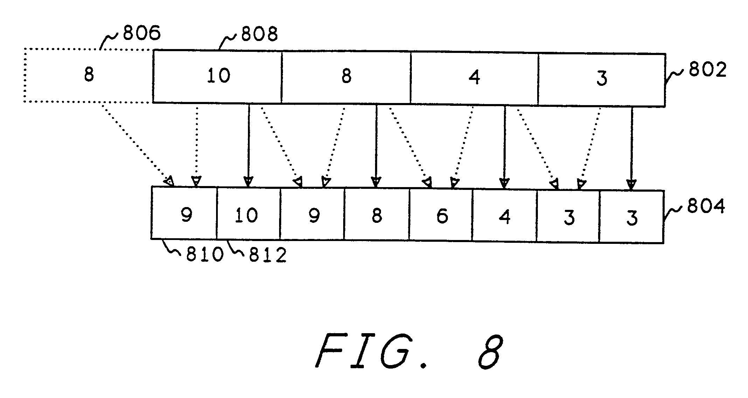

Fig. 8 shows the method of the invention for forming a new pixel between each horizontal pixel of the scanned data, to upscale the data in the X direction. This effectively upsamples the data by a factor of two. Those skilled in the art will recognize that other scale factors could also be used.

Referring now to Fig. 8, a current line 802 containing four pixels, plus a previous pixel 806, is shown being combined into a destination line 804 containing eight pixels. For each pixel within the current line 802, the pixel is copied to the destination line 804, and a new pixel is formed within the destination line 804 which comprises the average value of the current pixel and the pixel prior to the current pixel. For example, pixel 808 is copied into destination line 804 as pixel 812, and in addition, a new pixel 810 is formed by averaging the value of pixel 808 with a value of a previous pixel 806.

Fig. 9 shows a flowchart of the method for upsampling in the X direction, as described above with respect to Fig. 8. Fig. 9 is called from block 224 of Fig.

2. Referring now to Fig. 9, after entry, block 902 sets the value of a variable PREV to zero. PREV is the pixel previous to the ones being processed, and starts with an initial value of zero, which represents white.

The method of Fig. 9 processes four pixels at one time, and this data is stored within two bytes. Block 904 gets the next four pixels from the buffer, that is, the next two bytes. Block 906 then forms the value for the variable INDEX1 by concatenating the value for the variable PREV along with the first and second pixels. Block 908 then forms the value for a variable INDEX2 by concatenating the second, third, and fourth pixels together. Block 910 then obtains four pixel values from the upsampling lookup table using INDEX1 and block 912 obtains an additional four pixels by accessing the table using the variable INDEX2 and an index. Block 914 then stores these eight pixels in the destination line and block 916 sets the variable PREV to the value of the fourth pixel obtained in block 904. Block 918 then determines whether there are more pixels remaining to be processed within the line, and if there are, block 918 returns to block 904 to process the next four pixels. If there were no more pixels to be processed, control returns to Fig. 2.

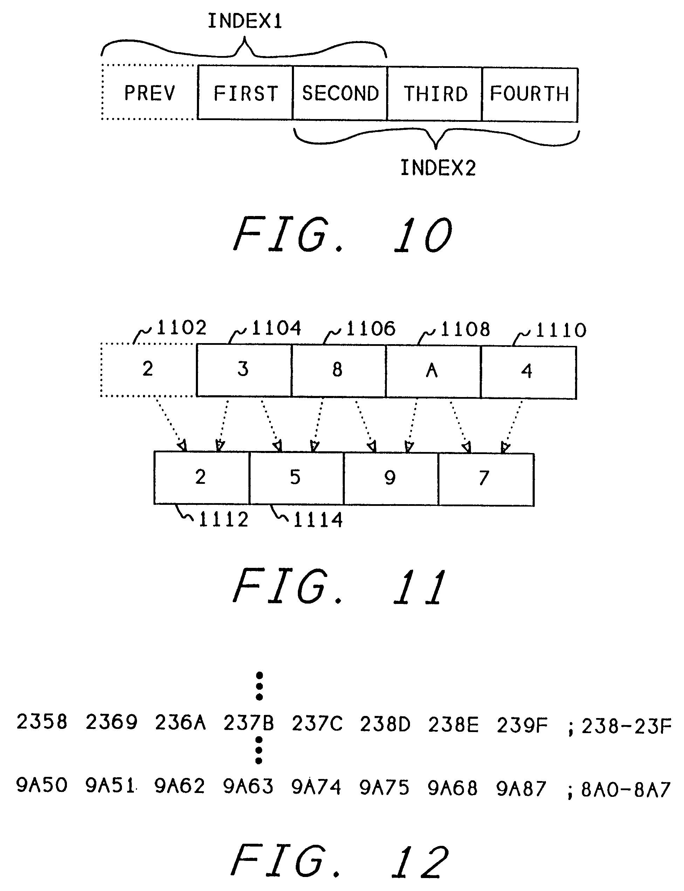

Fig. 10 is a diagram that illustrates how the variables INDEX1 and INDEX2 are formed from the variable PREV and the four pixels obtained in block 904. As shown in Fig. 10, INDEX1 is formed by concatenating the PREV variable along with the first and second pixels, and INDEX2 is formed by concatenating the second, third, and fourth pixels together.

Figs. 11 and 12 show how the pixels are combined to reference the upsampling lookup table, along with sample entries from the table. Referring now to Figs. 11 and 12, four pixels 1104, 1106, 1108, and 1110 are combined with a previous pixel 1102 as described above with respect to block 906. The value for the three pixels 1102, 1104, and 1106, which comprise the INDEX1 value, and described above with respect to Fig. 10, are used to access the upsampling lookup table. Two lines for the upsampling lookup table are shown in Fig. 12. The values for the three pixels 1102, 1104, and 1106, which is hexadecimal 238 in this example, are used to reference the table entry shown in Fig. 12. The table entry for hexadecimal 238 contains hexadecimal values 2358 which are then placed in the destination values for pixels 1112, 1104, 1114, and 1106. In the preferred embodiment, wherein the method of Fig. 9 is implemented on an Intel 386 class processor, the bytes of the upsampling lookup table are reversed such that the entry for hexadecimal 238 within the table would be 5823 rather than the 2358 shown in Fig. 12.

Having thus described a presently preferred embodiment of the present invention, it will now be appreciated that the aspects of the invention have been fully achieved, and it will be understood by those skilled in the art that many changes in construction and circuitry and widely differing embodiments and applications of the invention will suggest themselves without departing from the spirit and scope of the present invention. The disclosures and the description herein are intended to be illustrative and are not in any sense limiting of the invention, more preferably defined in scope by the following claims.

## Claims

1. A computer implemented upsampling method for producing upsampled data for input to a recognizer of an optical character recognition system, wherein characters formed from said upsampled data may be more accurately recognized by said recognizer, said computer implemented upsampling method comprising the steps of:

   (a) scanning (202) at least two scan lines of data from a document, wherein pixels of said scan lines have tonal values;

   (b) sharpening (210) said at least two scan lines to produce sharpened scan lines of data from said tonal values;

   (c) producing (222) additional y direction upsampled scan lines of data by combining said tonal values of said sharpened scan lines of data in a y direction;

   (d) producing (224) x direction upsampled scan lines of data by combining said tonal values of said sharpened scan lines of data in an x direction and by combining said tonal values of said additional y direction upsampled scan lines of data in an x direction; and

   (e) sending said x direction upsampled scan lines of data to said recognizer.

2. The method of claim 1 wherein step (b) further comprises the step of combining tonal values (408, 410) of all pixels adjacent each pixel within each scan line of data.

3. The method of claim 1 wherein step (b) further comprises the step of combining (408, 410) a tonal value of a pixel above each pixel (404), in a y direction, and a tonal value of a pixel below each pixel (408), in a y direction, within each scan line to produce a tonal value for a sharpened pixel.

4. The method of claim 3 wherein said combining comprises the steps of:

   when said pixel above each pixel and said pixel below each pixel have equal or darker tonal values, averaging (410) tonal values for all three pixels to produce a tonal value for said sharpened pixel; and

   when either said pixel above each pixel or said pixel below each pixel do not have equal or darker tonal values, summing a tonal value (410) of said pixel above each pixel and a tonal value of said pixel below each pixel, subtracting the result from four times a tonal value of said pixel and dividing this result by two to produce a tonal value for said sharpened pixel.

5. The method of claim 4 wherein said combining comprises the steps of:

concatenating (408) a tonal value of said pixel above each pixel, a tonal value of each pixel, and a tonal value of said pixel below each pixel into an index value; and

retrieving a tonal value (410) for said sharpened pixel from a table using said index value.

6. The method of claim 1 wherein step (c) further comprises the step of producing a third scan line of data between successive pairs of sharpened scan lines of data (702-716), wherein a tonal value of each pixel of said third scan line comprises a combination of tonal values for corresponding pixels within each line of said successive pairs of sharpened scan lines.

7. The method of claim 6 wherein step (c) further comprises forming tonal values for pixels in said third scanned pixel line of data by averaging (708, 710, 712) tonal values of corresponding pixels in each line of said pair of lines of data.

8. The method of claim 1 wherein step (d) further comprises the step of producing a pair of destination pixels in said x direction upsampled scan line of data for each original pixel in each sharpened scan line of data and each additional y direction upsampled scan line of data (902-918), wherein tonal values for said pair of pixels comprises a tonal value from said original pixel and a tonal value comprising a combination of said tonal value from said original pixel and a tonal value from a pixel previous to said original pixel within each scan line of data.

9. The method of claim 8 wherein step (d) further comprises forming said combination by averaging (906-914) said tonal value from said original pixel and said tonal value from said pixel previous to said original pixel.

10. The method of claim 1 wherein step (d) further comprises the following steps:

retrieving tonal values of four pixels from a scan line (904);

concatenating a tonal value of a last pixel from a previous producing, and tonal values of said four pixels to create a concatenated index (906, 908);

separating tonal values of a first three pixels of said concatenated index into a first index (906);

separating tonal values of a last three pixels of said concatenated index into a second index (908);

retrieving tonal values for a first four sharpened pixels from a table using said first index value (910);

retrieving tonal values for a second four sharpened pixels from a table using said second index value (912); and

storing said tonal values (914) for said first four sharpened pixels and said tonal values for said second four sharpened pixels into said x direction upsampled scan lines of data.

FIG. 1

EP 0 655 703 A2

ENTER

SCAN DOCUMENT
INTO BUFFER ~202

PREV_PTR =
BUFFER ~204

CUR_PTR =
BUFFER ~206

NEXT_PTR =
BUFFER + SRC_
BYTES_PER_LINE ~208

SHARPEN
CURRENT LINE
FIG. 4 ~210

PREV_PTR =
CUR_PTR ~212

CUR_PTR =
NEXT_PTR ~214

CUR_PTR
POINTING TO
LAST LINE
? ~216

Y

N

NEXT_PTR=NEXT_
PTR + SRC_
BYTES_PER_LINE ~218

NEXT_PTR =
CUR_PTR ~220

222

UPSAMPLE
Y VALUES FOR
CURRENT LINE
FIG. 7

224

UPSAMPLE
X VALUES FOR
CURRENT LINE
FIG. 9

MORE
LINES IN
BUFFER ~226

Y

N

RETURN

*FIG. 2*

| | | | | |
|---|---|---|---|---|
| | 304 | 306 | 308 | |
| | 310 | P 302 | 312 | |
| | 314 | 316 | 318 | |
| | | | | |

FIG. 3

FIG. 4

EP 0 655 703 A2

```
     .
     .
     .
     .
003h  002h  002h  004h  004h  004h  005h  005h  ;630-637
005h  006h  006h  006h  007h  007h  007h  008h  ;638-63F
     .
     .
     .
     .
```

## FIG. 5

EP 0 655 703 A2

| | 608 | | | | | |
|---|---|---|---|---|---|---|
| PREV | 10 | 10 | 5 | 5 | 6 | 10 | 602 |
| DEST | 9 | 9 | 4 | 3 | 6 | 5 | 604 |
| CUR | 8 | 8 | 3 | 2 | 6 | 0 | 606 |

610

612

# FIG. 6

FIG. 7

13

FIG. 8

ENTER

PREV = 0 ～902

GET FIRST/NEXT
FOUR PIXELS ～904

INDEX1 = PREV,
FIRST AND SECOND
PIXELS CONCAT-
ENATED TOGETHER ～906

INDEX2 = SECOND,
THIRD AND FOURTH
PIXELS CONCAT-
ENATED TOGETHER ～908

HIGH_FOUR =
TABLE[INDEX1] ～910

LOW_FOUR =
TABLE[INDEX2] ～912

STORE HIGH_FOUR
THEN LOW_FOUR
TO DESTINATION ～914

PREV = FOURTH
PIXEL ～916

～918

MORE
PIXELS?

Y

N

RETURN

FIG. 9

INDEX1

| PREV | FIRST | SECOND | THIRD | FOURTH |
|------|-------|--------|-------|--------|

INDEX2

## FIG. 10

~1102  ~1104  ~1106  ~1108  ~1110

| 2 | 3 | 8 | A | 4 |
|---|---|---|---|---|

| 2 | 5 | 9 | 7 |
|---|---|---|---|

~1112  ~1114

## FIG. 11

⋮

2358  2369  236A  237B  237C  238D  238E  239F  ;238-23F

⋮

9A50  9A51  9A62  9A63  9A74  9A75  9A68  9A87  ;8A0-8A7

## FIG. 12